# EUROPÄISCHE PATENTSCHRIFT

(11) **EP 3 106 674 B1**
(45) Veröffentlichungstag und Bekanntmachung des Hinweises auf die Patenterteilung: **29.01.2020**
(21) Anmeldenummer: 16172709.4
(22) Anmeldetag: 02.06.2016
(51) Int. Cl.: F04D 29/02, B29C 70/54, B29C 70/48, F04D 29/28

(54) **SCHAUFELRAD UND VERFAHREN ZUR HERSTELLUNG EINES SCHAUFELRADES**
BUCKET WHEEL AND METHOD FOR PRODUCING A BUCKET WHEEL
ROUE A PALETTES ET PROCEDE DE FABRICATION D'UNE ROUE A PALETTES

(30) Priorität: 15.06.2015 DE 102015210959
(43) Veröffentlichungstag der Anmeldung: 21.12.2016
(73) Patentinhaber: Schunk Kohlenstofftechnik GmbH, 35452 Heuchelheim (DE)
(72) Erfinder: HENRICH, Dr. Martin, 35582 Wetzlar (DE); NAUDITT, Gotthard, 35625 Hüttenberg (DE); HOWE, Tim Fabian, 35305 Grünberg (DE)
(74) Vertreter: advotec.

(56) Entgegenhaltungen:
- DE-A1- 10 104 170
- DE-A1-102006 040 800
- US-A1- 2011 173 812

## Beschreibung

Die vorliegende Erfindung betrifft ein Schaufelrad für eine Umwälzvorrichtung zum Umwälzen einer umgebenden Atmosphäre, wobei das Schaufelrad eine Mehrzahl von Schaufelblättern aufweist, die sich in Richtung einer Rotationsachse des Schaufelrades zwischen einem Schaufelblattträger und einer vorzugsweise ringförmig ausgebildeten Kopfscheibe erstrecken und mit ihrer Höhe den Abstand der Kopfscheibe vom Schaufelblattträger in Richtung der Rotationsachse definieren, wobei der Schaufelblattträger, die Kopfscheibe und die Schaufelblätter eine Laminatstruktur aufweisen mit jeweils einer Mehrzahl von aufeinander angeordneten Kohlenstofffaserlagenzuschnitten, wobei die Kohlenstofffaserlagenzuschnitte der die Schaufelblätter ausbildenden Laminatstruktur eine Zuschnittlänge aufweisen, die größer ist als die Höhe der Schaufelblätter, derart, dass die Kohlenstofffaserlagenzuschnitte in Verbindungsbereichen der Schaufelblätter mit dem Schaufelblattträger und der Kopfscheibe mit jeweils einem oberen und einem unteren Zuschnittende zwischen zwei benachbarten Kohlenstofffaserlagenzuschnitten des Schaufelblattträgers und der Kopfscheibe angeordnet sind.

Des Weiteren betrifft die Erfindung ein Verfahren zur Herstellung eines derartigen Schaufelrades.

Aus der US 2011/0173812 A1 ist ein Schaufelrad bekannt, welches eine Mehrzahl von Schaufelblättern aufweist, die sich in Richtung einer Rotationsachse des Schaufelrades zwischen einem Schaufelblattträger und einer Kopfscheibe erstrecken. Zudem ist offenbart, dass die Schaufelblatthöhe den Abstand der Kopfscheibe vom Schaufelblattträger in Richtung der Rotationsachse definiert. Der Schaufelblattträger, die Kopfscheibe und die Schaufelblätter weisen eine Laminatstruktur auf mit jeweils einer Mehrzahl von aufeinander angeordneten Kohlenstofffaserlagenzuschnitten.

Aus der DE 10 2012 214 405 A1 ist eine Umwälzvorrichtung zum Umwälzen einer umgebenden Atmosphäre bekannt, die ein aus mehreren voneinander unabhängigen Komponenten gebildetes Schaufelrad betrifft, so dass etwa zur Verbindung der Schaufelblätter mit dem Schaufelblattträger und einer Kopfscheibe Bolzenverbindungen vorgeschlagen werden, derart, dass an den jeweils oberen und unteren Enden der Schaufelblätter ausgebildete Gewindebolzen durch Durchstecköffnungen des Schaufelblattträgers und der Kopfscheibe hindurchgeführt und an ihren freien axialen Enden mit einer Mutter versehen werden, die wie die Bolzen aus Graphit gebildet ist. Zur Sicherung dieser Verbindungen bzw. zur Kompensation von Setzerscheinungen an diesen Verbindungen, die im Betrieb der Umwälzvorrichtung aufgrund von Änderungen der Vorspannkraft in der Schraubenverbindung auftreten können, wird eine lokale Silizierung des Verbindungsbereichs oder die Anordnung eines Federelementes zwischen den mittels der Schraubverbindung gegeneinander verspannten Komponenten vorgeschlagen.

Die aus der DE 10 2012 214 405 A1 bekannte Lehre zur Sicherung der Verbindungen zwischen unabhängig voneinander ausgebildeten Komponenten des Schaufelrads hat sich in der Praxis bei modular zusammengesetzten Schaufelrädern bewährt. Allerdings erfordert der Aufbau eines Schaufelrades aus voneinander unabhängig modularen Komponenten die vorstehend skizzierten besonderen Sicherungsmaßnahmen, um eine betriebssichere Verbindung zwischen den Komponenten zu gewährleisten.

Der vorliegenden Erfindung liegt die Aufgabe zugrunde, ein Schaufelrad bzw. ein Verfahren zur Herstellung eines Schaufelrads vorzuschlagen, das eine betriebssichere Verbindung zwischen den Schaufelblättern und dem Schaufelblattträger sowie der Kopfscheibe ermöglicht, ohne dass hierzu unabhängig von der Herstellung der vorgenannten Komponenten besondere Maßnahmen erforderlich sind.

Zur Lösung dieser Aufgabe weist das erfindungsgemäße Schaufelrad die Merkmale des Anspruchs 1 auf.

Das erfindungsgemäße Schaufelrad weist zur Verbindung der Schaufelblätter mit dem Schaufelblattträger und der Kopfscheibe in den Verbindungsbereichen eine Laminatstruktur auf, bei der obere und untere Enden der die Laminatstruktur der Schaufelblätter ausbildenden Kohlenstofffaserlagenzuschnitte eine interlaminare Verbindung zwischen dem Schaufelblattträger und der Kopfscheibe ausbilden. Dabei bildet sich eine Verbindungslaminatstruktur mit einer Art Verzahnung zwischen der Laminatstruktur der Schaufelblätter und den Laminatstrukturen des Schaufelblattträgers und der Kopfscheibe aus. Die Erfindung ermöglicht somit eine integrale Ausbildung der Verbindungen zwischen den Schaufelblättern und dem Schaufelblattträger und der Kopfscheibe, ohne dass hierzu gesonderte Verbindungsmittel benötigt werden, und somit eine insgesamt einstückige Ausgestaltung des Schaufelrades.

Darüber hinaus weist das erfindungsgemäße Schaufelrad eine Verbindung auf, die synchron mit der Ausbildung der Laminatstrukturen des Schaufelblattträgers und der Kopfscheibe ausgebildet wird, so dass auch kein gesonderter Arbeitsgang zur Herstellung der Verbindung notwendig ist.

Die Ausgestaltung eines Schaufelrades, bei dem in besonderer Weise Unstetigkeitsstellen sowie insbesondere Steifigkeitssprünge zwischen den Schaufelblättern und dem Schaufelblattträger und der Kopfscheibe vermieden werden, wird erreicht, wenn die Laminatstruktur in den Verbindungsbereichen derart ausgebildet ist, dass die oberen und unteren Zuschnittenden der Kohlenstofffaserlagenzuschnitte der Schaufelblätter alternierend mit den Kohlenstofffaserlagenzuschnitten des Schaufelblattträgers und der Kopfscheibe angeordnet sind.

Unabhängig von der besonderen Ausführungsform des Schaufelrades weist das erfindungsgemäße Schaufelrad durch die Vermeidung von besonderen Verbindungselementen auch den Vorteil auf, dass Masseanhäufungen in den Verbindungsbereichen, die im Betrieb des Schaufelrades zur Ausbildung von Unwuchten führen können, vermieden werden. Damit werden ohne Beeinträchtigung der Betriebssicherheit höhere Rotationsgeschwindigkeiten möglich.

Auch werden bei dem erfindungsgemäßen Schaufelrad die möglichen Betriebstemperaturen nicht durch die Temperaturfestigkeit der Verbindungselemente oder der die Verbindung zwischen den Verbindungselementen sichernden Maßnahmen, wie etwa die lokale Silizierung, eingeschränkt.

Das erfindungsgemäße Verfahren weist die Merkmale des Anspruchs 3 auf.

Erfindungsgemäß wird zur Ausbildung des Schaufelblattträgers, der Kopfscheibe und der Schaufelblätter jeweils eine Laminatstruktur mit einer Mehrzahl benachbarter Kohlenstofffaserlagenzuschnitte aufgebaut, und zur Ausbildung von Verbindungsbereichen zwischen der Laminatstruktur der Schaufelblätter und den Laminatstrukturen des Schaufelblattträgers und der Kopfscheibe werden obere und untere Zuschnittenden der Kohlenstofffaserlagenzuschnitte der Schaufelblätter nach Durchführung durch in den Kohlenstofffaserlagenzuschnitten des Schaufelblattträgers und der Kopfscheibe ausgebildeten Durchstecköffnungen gegen einen Kohlenstofffaserlagenzuschnitt verschwenkt und mit einem weiteren Kohlenstofffaserlagenzuschnitt des Schaufelblattträgers und der Kopfscheibe belegt.

Vorzugsweise wird in den Verbindungsbereichen eine Laminatstruktur mit einer alternierenden Anordnung von Kohlenstofffaserlagenzuschnitten des Schaufelblattträgers und der Kopfscheibe mit Zuschnittenden der Kohlenstofffaserlagenzuschnitte der Schaufelblätter ausgebildet.

Wenn bereits während des Aufbaus der Laminatstrukturen des Schaufelblattträgers und der Kopfscheibe eine zumindest temporäre Fixierung der Zuschnittenden der Kohlenstofffaserlagenzuschnitte der Schaufelblätter auf den Kohlenstofffaserlagenzuschnitten des Schaufelblattträgers und der Kopfscheibe erfolgt, wird der Aufbau definierter Laminatstrukturen erleichtert.

Wenn zur definierten Relativanordnung der Schaufelblätter gegenüber dem Schaufelblattträger und der Kopfscheibe die zu der Laminatstruktur der Schaufelblätter zusammengefügten Kohlenstofffaserlagenzuschnitte der Schaufelblätter in Positionierungsschlitzen eines einen Formring ausbildenden Formwerkzeugs angeordnet werden, derart, dass die oberen und unteren Zuschnittenden jeweils eine durch eine Oberseite und eine Unterseite des Formwerkzeugs gebildete Anlagefläche überragen und die Kohlenstofffaserlagenzuschnitte des Schaufelblattträgers und der Kopfscheibe unter Ausbildung der Laminatstruktur der Verbindungsbereiche zum Schaufelblattträger und zur Kopfscheibe auf der Anlagefläche abgelegt werden, ist sichergestellt, dass eine vorgegebene Geometrie des Schaufelrades auch tatsächlich herstellbar ist.

Nachfolgend werden unter Bezugnahme auf die Zeichnung ein Schaufelrad sowie ein bevorzugtes Verfahren zur Herstellung des Schaufelrads näher beschrieben.

Es zeigen:
- **Fig. 1:**: eine Umwälzvorrichtung mit einem Schaufelrad in isometrischer Darstellung;
- **Fig. 2**:: das Schaufelrad in Einzeldarstellung;
- **Fig. 3**:: ein Formwerkzeug zur Herstellung des in **Fig. 2** dargestellten Schaufelrades;
- **Fig. 4A-4F:**: aufeinanderfolgende Herstellungsphasen bei der Herstellung des Schaufelrades durch Aufbau von Laminatstrukturen;
- **Fig. 5:**: das Schaufelrad mit den aufgebauten Laminatstrukturen.

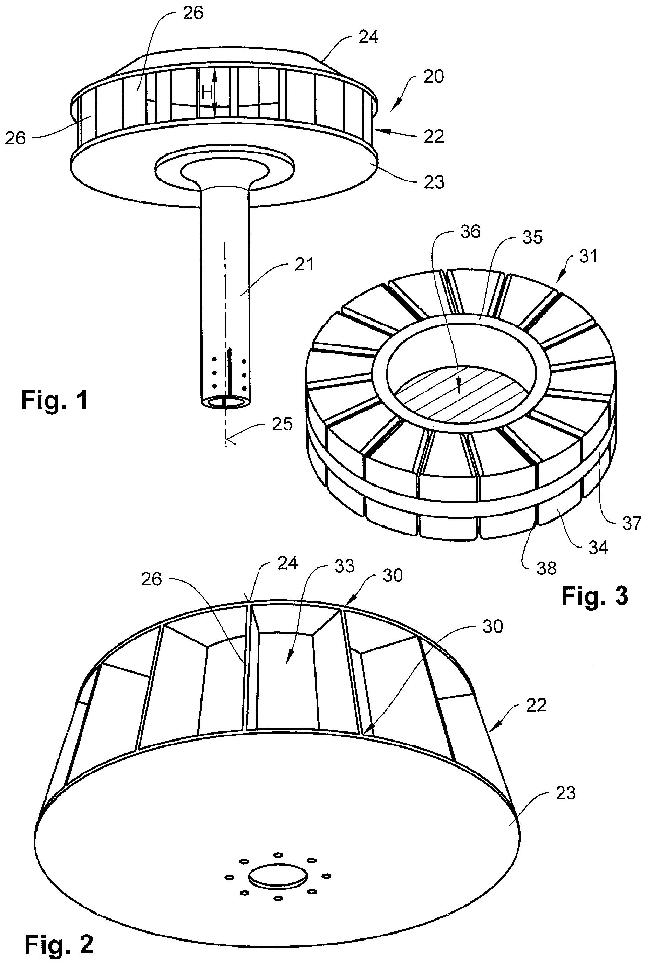

**Fig. 1** zeigt eine Umwälzvorrichtung 20 mit einer Welle 21 zur Verbindung der Umwälzvorrichtung 20 mit einer hier nicht näher dargestellten Antriebsvorrichtung und einem mit der Welle 21 drehstarr verbundenen Schaufelrad 22, das zwischen einem Schaufelblattträger 23 und einer Kopfscheibe 24 eine Vielzahl von konzentrisch zu einer Rotationsachse 25 angeordneten Schaufelblättern 26 aufweist. Die Schaufelblätter 26 weisen eine Höhe H auf, die dem axialen Abstand der Kopfscheibe 24 von dem Schaufelblattträger 23 in Richtung der Rotationsachse 25 entspricht.

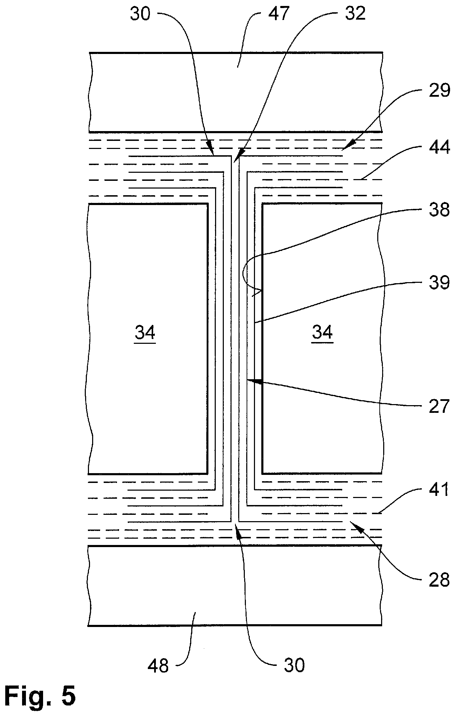

Die Schaufelblätter 26, der Schaufelblattträger 23 und die Kopfscheibe 24 weisen jeweils, wie in **Fig. 5** dargestellt, eine Laminatstruktur 27, 28, 29 auf, die aus einzelnen übereinanderliegend angeordneten Kohlenstofffaserlagenzuschnitten 39, 41, 44 ausgebildet ist.

**Fig. 3** zeigt ein Formwerkzeuges 31, das bei der Ausbildung der Laminatstrukturen 27, 28, 29 und insbesondere bei der Ausbildung einer in **Fig. 5** dargestellten Verbindungslaminatstruktur 32 in Verbindungsbereichen 30 zwischen den Schaufelblättern 26 und dem Schaufelblattträger 23 sowie der Kopfscheibe 24 zum Einsatz kommt.

Wie aus einer Zusammenschau der **Fig. 2** und **3** deutlich wird, weist das Formwerkzeug 31 eine der Anzahl von Schaufelblattzwischenräumen 33 entsprechende Anzahl von Formblöcken 34 auf, die um einen Formring 35 herum angeordnet sind, wobei eine Formringöffnung 36 an der Unterseite des Formrings 35 mit einer Formscheibe 36 verschlossen ist.

Die Formblöcke 34 werden in ihrer in **Fig. 3** dargestellten Anordnung durch einen Spannring 37 gesichert, der am Außenumfang der Formblöcke 34 anliegt und die Formblöcke 34 gegen den Formring 35 drückt.

Wie **Fig. 3** zeigt, sind die Formblöcke 34 so ausgebildet bzw. relativ zueinander angeordnet, dass zwischen jeweils zwei nebeneinander angeordneten Formblöcken 34 ein Positionierungsschlitz 38 ausgebildet ist, der die Ausrichtung der Schaufelblätter 26 vorgibt.

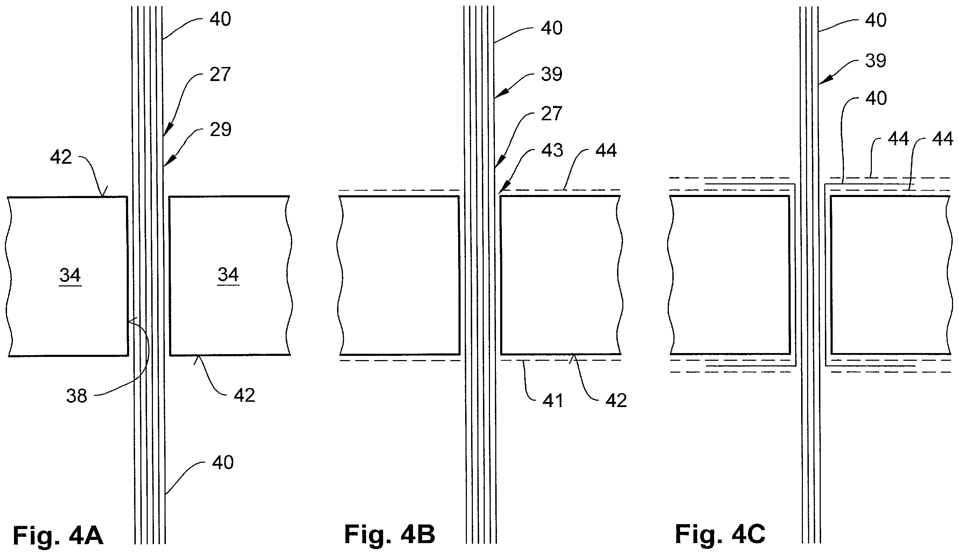

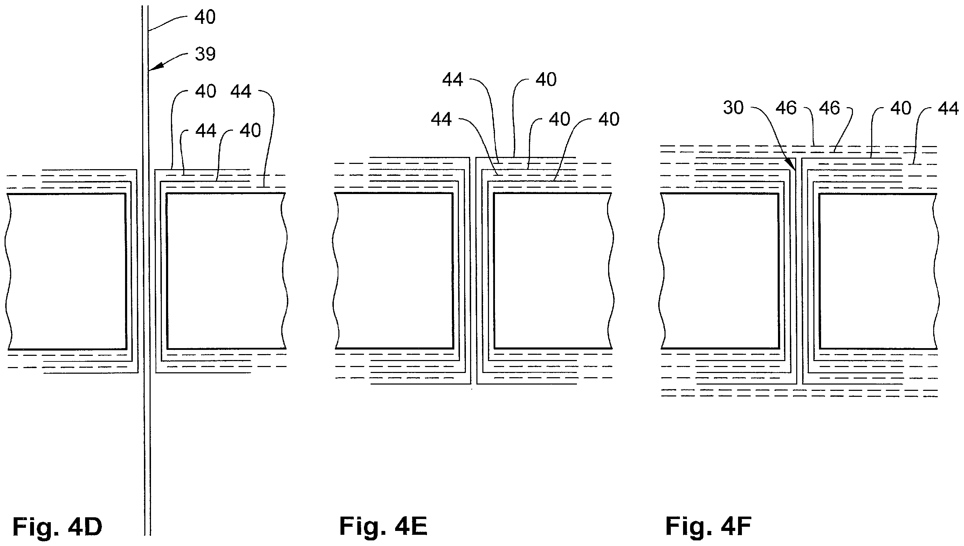

Anhand der Figuren **4A** bis **4F** und **5**, die eine vergrößerte Teildarstellung eines Positionierungsschlitzes 38 des Formwerkzeugs 31 während der Herstellung des Schaufelrades 22 zeigen, wird nachfolgend der Aufbau der Laminatstrukturen 28, 29 des Schaufelblattträgers 23 und der Kopfscheibe 24 sowie der Verbindungslaminatstruktur 32 erläutert.

**Fig. 4A** zeigt, wie die Laminatstruktur 27 des Schaufelblatts 26, die aus einer Mehrzahl von aufeinander angeordneten Kohlenstofffaserlagenzuschnitten 39 gebildet ist, so in dem Positionierungsschlitz 38 zwischen zwei benachbarten Formblöcken 34 angeordnet wird, dass obere und untere Zuschnittenden 40 der Kohlenstofffaserlagenzuschnitte 39 nach Einführung in den Positionierungsschlitz 38 eine durch die Oberseite und die Unterseite der Formblöcke 34 gebildete Anlagefläche 42 des Formwerkzeuges 31 überragen.

Nachfolgend wird entsprechend der Darstellung in **Fig. 4B** ein erster Kohlenstofffaserlagenzuschnitt 44 der Kopfscheibe 24 auf der Anlagefläche 42 abgelegt, derart, dass die Laminatstruktur 27 des Schaufelblatts 26 durch eine Durchstecköffnung 43 im Kohlenstofffaserlagenzuschnitt 44 der Kopfscheibe 24 hindurchgeführt wird und das obere Zuschnittende 40 gegen den Kohlenstofffaserlagenzuschnitt 44 verschwenkt wird. Entsprechend erfolgt eine Anordnung eines ersten Kohlenstofffaserlagenzuschnitts 41 des Schaufelblattträgers 23 auf der gegenüberliegenden Anlagefläche 42, wobei im Verlauf der weiteren Figurenabfolge der **Fig. 4C** bis **4F** nur noch die Vorgänge auf der oberen Anlagefläche 42 zur Ausbildung der Verbindungslaminatstruktur 32 im Verbindungsbereich 30 zwischen dem Schaufelblatt 26 und der Kopfscheibe 24 erläutert werden. Die Ausbildung des Verbindungsbereichs 30 zwischen dem Schaufelblatt 26 und dem Schaufelblattträger 23 auf der unteren Anlagefläche 42 erfolgt entsprechend.

Wie sich aus der Figurenabfolge der **Fig. 4C** bis **4E** ergibt, erfolgt nach einem Verschwenken der Zuschnittenden 40 der äußeren Kohlenstofffaserlagenzuschnitte 39 gegen den auf der Anlagefläche 42 angeordneten Kohlenstofffaserlagenzuschnitt 44 die Ablage eines weiteren Kohlenstofffaserlagenzuschnitts 44, so dass die Zuschnittenden 40 zwischen zwei benachbarten Kohlenstofffaserlagenzuschnitten 44 der Kopfscheibe 24 angeordnet sind. Nachfolgend werden von außen nach innen fortschreitend die weiteren Zuschnittenden 40 der Kohlenstofffaserlagenzuschnitte 39 in alternierender Abfolge mit den Kohlenstofffaserlagenzuschnitten 44 der Kopfscheibe 24 auf der Anlagefläche 42 angeordnet, bis schließlich, wie in **Fig. 4E** dargestellt, sämtliche Zuschnittenden 40 der Kohlenstofffaserlagenzuschnitte 39 des Schaufelblatts 26 gegen die jeweils auf der Anlagefläche 42 angeordneten Kohlenstofffaserlagenzuschnitte 44, die die Laminatstruktur 29 der Kopfscheibe 24 ausbilden, angeordnet sind. Somit wird die Verbindungslaminatstruktur 32 des Verbindungsbereichs 30 zusammen mit der Laminatstruktur 29 der Kopfscheibe 24 ausgebildet.

Abschließend werden, wie in **Fig. 4F** dargestellt, noch als Decklagen ausgebildete Kohlenstofffaserlagenzuschnitte 46 angeordnet, die, wie im übrigen auch die darunter befindlichen Kohlenstofffaserlagenzuschnitte 44 der Kopfscheibe 24 und die Kohlenstofffaserlagenzuschnitte 41 des Schaufelblattträgers 23 bei Bedarf aus Gewebelagen mit besonderer Faserorientierung, also beispielsweise Spiralgewebelagen, gebildet sein können.

**Fig. 5** zeigt das um eine Oberplatte 47 und eine Unterplatte 48 ergänzte Formwerkzeug 31 mit dem in **Fig. 4F** dargestellten Verbindungsbereich 30, der sowohl zwischen der Laminatstruktur 27 des Schaufelblatts 26 und der Laminatstruktur 28 des Schaufelblattträgers 23 als auch zwischen der Laminatruktur 27 des Schaufelblatts 26 und der Laminatstruktur 29 der Kopfscheibe 24 ausgebildet ist, vor der Imprägnierung der Laminatstrukturen 27, 28, 29, 32 mit einem Phenolharz und nachfolgender Aushärtung.

Nach Aushärtung wird das im Formwerkzeug als Laminatstruktur ausgebildete Schaufelrad 22 in einer Schutzgasatmosphäre pyrolysiert. Während dieses Prozesses bleibt das Schaufelrad im Formwerkzeug zwischen der Oberplatte 47 und der Unterplatte 48 angeordnet.

Vor einer anschließenden Hochtemperaturbehandlung, die ebenfalls in einer Schutzgasatmosphäre oder im Vakuum stattfindet mit Temperaturen bis unterhalb von 2400 °C, werden die Oberplatte 47 und die Unterplatte 48 entfernt und das Schaufelrad 22 wird dem Formwerkzeug 31 entnommen. Gegebenenfalls kann anschließend noch eine Nachverdichtung und Wärmebehandlung des Schaufelrades 22 erfolgen.

## Patentansprüche

1. Schaufelrad (22) für eine Umwälzvorrichtung zum Umwälzen einer umgebenden Atmosphäre, wobei das Schaufelrad eine Mehrzahl von Schaufelblättern (26) aufweist, die sich in Richtung einer Rotationsachse (25) des Schaufelrades zwischen einem Schaufelblattträger (23) und einer vorzugsweise ringförmig ausgebildeten Kopfscheibe (24) erstrecken und mit ihrer Schaufelblatthöhe H den Abstand der Kopfscheibe vom Schaufelblattträger in Richtung der Rotationsachse definieren, wobei der Schaufelblattträger, die Kopfscheibe und die Schaufelblätter eine Laminatstruktur (27, 28, 29) aufweisen mit jeweils einer Mehrzahl von aufeinander angeordneten Kohlenstofffaserlagenzuschnitten (39, 41, 44), wobei die Kohlenstofffaserlagenzuschnitte (39) der die Schaufelblätter ausbildenden Laminatstruktur (27) eine Zuschnittlänge aufweisen, die größer ist als die Höhe der Schaufelblätter, derart, dass die Kohlenstofffaserlagenzuschnitte (39) in Verbindungsbereichen (30) der Schaufelblätter mit dem Schaufelblattträger und der Kopfscheibe mit jeweils einem oberen und einem unteren Zuschnittende (40) zwischen zwei benachbarten Kohlenstofffaserlagenzuschnitten (41, 44) des Schaufelblattträgers und der Kopfscheibe angeordnet sind.

2. Schaufelrad nach Anspruch 1,
**dadurch gekennzeichnet,**
**dass** in den Verbindungsbereichen (30) eine Verbindungslaminatstruktur (32) ausgebildet ist, bei der die oberen und unteren Zuschnittenden (40) der Kohlenstofffaserlagenzuschnitte (39) der Schaufelblätter (26) alternierend mit den Kohlenstofffaserlagenzuschnitten (41, 44) des Schaufelblattträgers (23) und der Kopfscheibe (24) angeordnet sind.

3. Verfahren zur Herstellung eines Schaufelrades (22) für eine Umwälzvorrichtung zum Umwälzen einer umgebenden Atmosphäre, wobei das Schaufelrad eine Mehrzahl von Schaufelblättern (26) aufweist, die sich in Richtung einer Rotationsachse (25) des Schaufelrades zwischen einem Schaufelblattträger (23) und einer Kopfscheibe (24) erstrecken und mit ihrer Schaufelblatthöhe H den Abstand der Kopfscheibe vom Schaufelblattträger in Richtung der Rotationsachse definieren, wobei zur Ausbildung des Schaufelblattträgers, der Kopfscheibe und der Schaufelblätter jeweils eine Laminatstruktur (27, 28, 29) mit einer Mehrzahl benachbarter Kohlenstofffaserlagenzuschnitte (39, 41, 44) aufgebaut wird, und zur Ausbildung von Verbindungsbereichen (30) zwischen der Laminatstruktur (27) der Schaufelblätter und den Laminatstrukturen (28, 29) des Schaufelblattträgers und der Kopfscheibe obere und untere Zuschnittenden (40) der Kohlenstofffaserlagenzuschnitte (39) der Schaufelblätter nach Durchführung durch in den Kohlenstofffaserlagenzuschnitten (41, 44) des Schaufelblattträgers und der Kopfscheibe ausgebildeten Durchstecköffnungen (43) gegen einen Kohlenstofffaserlagenzuschnitt (41, 44) verschwenkt und mit einem weiteren Kohlenstofffaserlagenzuschnitt (41, 44) des Schaufelblattträgers und der Kopfscheibe belegt werden.

4. Verfahren nach Anspruch 3,
**dadurch gekennzeichnet,**
**dass** in den Verbindungsbereichen (30) eine Verbindungslaminatstruktur (32) mit einer alternierenden Anordnung von Kohlenstofffaserlagenzuschnitten (41) des Schaufelblattträgers (23) und der Kopfscheibe (24) mit Zuschnittenden (40) der Kohlenstofffaserlagenzuschnitte (39) der Schaufelblätter (26) ausgebildet wird.

5. Verfahren nach Anspruch 3 oder 4,
**dadurch gekennzeichnet,**
**dass** während des Aufbaus der Laminatstrukturen (28, 29) des Schaufelblattträgers (23) und der Kopfscheibe (24) eine zumindest temporäre Fixierung der Zuschnittenden (40) der Kohlenstofffaserlagenzuschnitte (39) der Schaufelblätter (26) auf den Kohlenstofffaserlagenzuschnitten (41, 44) des Schaufelblattträgers (23) und der Kopfscheibe (24) erfolgt.

6. Verfahren nach einem der Ansprüche 3 bis 5,
**dadurch gekennzeichnet,**
**dass** die Gesamtheit der Zuschnittenden (40) der die Schaufelblätter (26) bildenden Kohlenstofffaserlagenzuschnitte (39) durch die Durchstecköffnungen (43) der Kohlenstofffaserlagenzuschnitte (41, 44) des Schaufelblattträgers (23) und der Kopfscheibe (24) hindurch geführt wird und nachfolgend zur Ausbildung der Verbindungslaminatstrukur (32) in den Verbindungsbereichen (30) das Verschwenken der Zuschnittenden (40) gegen jeweils einen Kohlenstofffaserlagenzuschnitt (41, 44) des Schaufelblattträgers (23) und der Kopfscheibe (24) erfolgt.

7. Verfahren nach einem der Ansprüche 3 bis 6,
**dadurch gekennzeichnet,**
**dass** zur definierten Relativanordnung der Schaufelblätter (26) gegenüber dem Schaufelblattträger (23) und der Kopfscheibe (24) die zu der Laminatstruktur (27) der Schaufelblätter zusammengefügten Kohlenstofffaserlagenzuschnitte (39) der Schaufelblätter in Positionierungsschlitzen (38) eines einen Formring ausbildenden Formwerkzeugs (31) angeordnet werden, derart, dass die oberen und unteren Zuschnittenden (40) jeweils eine durch eine Oberseite und eine Unterseite des Formwerkzeugs gebildete Anlagefläche (42) überragen, und die Kohlenstofffaserlagenzuschnitte (41, 44) des Schaufelblattträgers (23) und der Kopfscheibe (24) unter Ausbildung der Verbindungslaminatstruktur (32) der Verbindungsbereiche (30) zum Schaufelblattträger (23) und zur Kopfscheibe (24) auf der Anlagefläche abgelegt werden.

## Claims

1. An impeller (22) for a circulation device for circulating an ambient atmosphere, said impeller comprising a plurality of impeller blades (26) which extend between an impeller blade carrier (23) and a preferably circular top panel (24) toward a rotational axis (25) of the impeller and define the distance of the top panel from the impeller blade carrier toward the rotational axis via its impeller blade height H, said impeller blade carrier, said top panel and said impeller blades comprising a laminate structure (27, 28, 29), each having a plurality of carbon fiber layer blanks (39, 41, 44) disposed on top of each other, said carbon fiber layer blanks (39) of the laminate structure forming the impeller blades comprising a blank length which is larger than the height of the impeller blades such that the carbon fiber layer blanks (39) are disposed between two adjacent carbon fiber layer blanks (41, 44) of the impeller blade carrier and the top panel by a top and a bottom blank end (40) respectively in connecting areas (30) connecting the impeller blades to the impeller blade carrier and the top panel.

2. The impeller according to claim 1,
**characterized in that**
a connecting laminate structure (32) is formed in the connecting areas (30), the upper and the lower blank ends (40) of the carbon fiber layer blanks (39) of the impeller blades (26) being disposed alternatingly with the carbon fiber layer blanks (41, 44) of the impeller blade carrier (23) and the top panel (24) in the connecting laminate structure (32).

3. A method for producing an impeller (22) for a circulation device for circulating an ambient atmosphere, said impeller comprising a plurality of impeller blades (26) which extend between an impeller blade carrier (23) and a top panel (24) toward a rotational axis (25) of the impeller and defining the distance of the top panel from the impeller blade carrier toward the rotational axis via its impeller blade height H, a laminate structure (27, 28, 29) being constructed by means of a plurality of adjacent carbon fiber layer blanks (39, 41, 44) for constructing the impeller blade carrier, the top panel and the impeller blades, and upper and lower blank ends (40) of the carbon fiber layer blanks (39) of the impeller blades being pivoted against a carbon fiber layer blank (41, 44) and being covered with a further carbon fiber layer blank (41, 44) of the impeller blade carrier and the top panel after being inserted through through openings (43), which are formed in the carbon fiber layer blank (41, 44) of the impeller blade carrier and the top panel, for forming connecting areas (30) between the laminate structure (27) of the impeller blades and the laminate structures (28, 29) of the impeller blade carrier and the top panel.

4. The method according to claim 3,
**characterized in that**
in the connecting areas (30) a connecting laminate structure (32) having alternating carbon fiber layer blanks (41) of the impeller blade carrier (23) and the top panel (24) are formed using blank ends (40) of the carbon fiber layer blanks (39) of the impeller blades (26).

5. The method according to claim 3 or 4,
**characterized in that**
the blank ends (40) of the carbon fiber layer blanks (39) of the impeller blades (26) are at least temporarily fixated on the carbon fiber layer blanks (41, 44) of the impeller blade carrier (23) and the top panel (24) while constructing the laminate structures (28, 29) of the impeller blade carrier (23) and the top panel (24).

6. The method according to any one of the claims 3 to 5,
**characterized in that**
the entirety of blank ends (40) of the carbon fiber layer blanks (39) forming the impeller blades (26) are guided through the through openings (43) of the carbon fiber layer blanks (41, 44) of the impeller blade carrier (23) and the top panel (24) and that the blank ends (40) are each pivoted against a carbon fiber layer blank (41, 44) of the impeller blade carrier (23) and the top panel (24) subsequently to having formed the connecting laminate structure (32).

7. The method according to any one of the claims 3 to 6,
**characterized in that**
for the defined relative disposition of the impeller blades (26) with respect to the impeller blade carrier (23) and the top panel (24), the carbon fiber layer blanks (39) of the impeller blades, which are combined to form the laminate structure (27) of the impeller blades, are disposed in positioning slits (38) of a molding tool (31), which forms a molding ring, in such a manner that the upper and lower blank ends (40) project over an abutment surface (42) formed by an upper side and a lower side of the molding tool, and **in that** the carbon fiber layer blanks (41, 44) of the impeller blade carrier (23) and the top panel (24) are stacked on the abutment surface under formation of the connecting laminate structure (32) of the connecting areas (30) to the impeller blade carrier (23) and to the top panel (24).

## Revendications

1. Roue à pales (22) pour un dispositif de circulation pour la circulation d'une atmosphère ambiante, ladite roue à pales comprenant une pluralité des pales (26) qui s'étend vers un axe de rotation (25) de la roue à pales entre un porteur de pale (23) et un panneau supérieur (24) préférablement circulaire et définit la distance du panneau supérieur du porteur de pale vers l'axe de rotation par sa largeur de pales H, ledit porteur de pale, ledit panneau supérieur et lesdites pales comprenant une structure stratifiée (27, 28, 29), chacune ayant une pluralité des coupes de couche de fibre de carbone (39, 41, 44) disposées l'une sure l'autre, lesdites coupes de couche de fibre de carbone (39) de la structure stratifiée formant les pales comprenant une longueur de coupe qui est plus longue que la largeur des pales de telle manière que les coupes de couche de fibre de carbone (39) sont disposés entre deux coupes adjacentes de couche de fibre de carbone (41, 44) du porteur de pale et du panneau supérieur par un bout de coupe (40) supérieur et inférieur respectivement dans des zones de connexion (30) connectant les pales au porteur de pale et au panneau supérieur.

2. Roue à pales selon la revendication 1,
**caractérisée en ce qu'**
une structure stratifiée de connexion (32) est formée dans les zones de connexion (30), les bouts de coupe (40) supérieurs et inférieur des coupes de couche de fibre de carbone (39) des pales (26) étant disposées alternativement avec les coupes de couche de fibre de carbone (41, 44) du porteur de pale (23) et du panneau supérieur (24) dans la structure stratifiée de connexion (32).

3. Procédé pour la production d'une roue à pales (22) pour un dispositif de circulation pour la circulation d'une atmosphère ambiante, ladite roue à pales comprenant une pluralité des pales (26) qui s'étend vers un axe de rotation (25) de la roue à pales entre un porteur de pale (23) et un panneau supérieur (24) et définit la distance du panneau supérieur du porteur de pale vers l'axe de rotation par sa largeur H, une structure stratifiée (27, 28, 29) étant construite par une pluralité des coupes adjacentes de couche de fibre de carbone (39, 41, 44) pour la construction du porteur de pale, du panneau supérieur et des pales, et des bouts de coupe (40) supérieurs et inférieurs des coupes de couche de fibre de carbone (39) des pales étant pivotés contre une coupe de couche de fibre de carbone (41, 44) et étant pourvu d'une outre coupe de couche de fibre de carbone (41, 44) du porteur de pale et du panneau supérieur pour la formation des zones de connexion (30) entre la structure stratifiée (27) des pales et les structures stratifiées (28, 29) du porteur de pale et du panneau supérieur après les bouts supérieurs et inférieur sont insérés au travers des ouvertures de traversée (43) formées dans les coupes de couche de fibre de carbone (41, 44) du porteur de pale et du panneau supérieur.

4. Procédé selon la revendication 3,
**caractérisé en ce qu'**
une structure stratifiée de connexion (32) ayant des coupes de couche de fibre de carbone (41) alternatives du porteur de pale (23) et du panneau supérieur sont formées dans les zones de connexion (30) en utilisant des bouts de coupe (40) des coupes de couche de fibre de carbone (39) des pales (26).

5. Procédé selon la revendication 3 ou 4,
**caractérisé en ce que**
les bouts de coupe (40) des coupes de couche de fibre de carbone (39) des pales (26) sont fixé au moins temporellement sur les coupes de couche de fibre de carbone (41, 44) du porteur de pale (23) et du panneau supérieur (24) pendant la construction de la structure stratifiées (28, 29) du porteur de pale (23) et du panneau supérieur (24).

6. Procédé selon l'une quelconque des revendications 3 à 5,
**caractérisé en ce que**
tous les bouts de coupe (40) des coupes de couche de fibre de carbone (39) formant les pales (26) sont guidés au travers des ouvertures de traversée (43) des coupes de couche de fibre de carbone (41, 44) du porteur de pale (23) et du panneau supérieur (24) et **en ce que** les bouts de coupe (40) sont chacun pivotés contre une coupe de couche de fibre de carbone (41, 44) du porteur de pale et du panneau supérieur (24) subséquemment à la formation de la structure stratifiée de connexion (32).

7. Procédé selon l'une quelconque des revendications 3 à 6,
**caractérisé en ce que**
pour la disposition relative définie des pales (26) par rapport au porteur de pale (23) et au panneau supérieur (24), les coupes de couche de fibre de carbone (39) des pales qui sont assemblé pour former la structure stratifiée (27) sont disposées dans les fentes de positionnement (38) d'un outil de moulage (31), qui forme un anneau de moulage, de telle manière que les bouts de coupe (40) supérieurs et inférieures saillissent sur une surface d'appui (42) formée par un côté supérieur et un côté inférieur de l'outil de moulage, et **en ce que** les coupes de couche de fibre de carbone (41, 44) du porteur de pale (23) et du panneau supérieur (24) sont empilées sur la surface d'appui au porteur de pale (23) et au panneau supérieur (24) en formant la structure stratifiée de connexion (32) des zones de connexion (30).
